# EUROPEAN PATENT APPLICATION

(11) **EP 1 873 608 A2**
(43) Date of publication of application: **02.01.2008**
(21) Application number: 07111115.7
(22) Date of filing: 27.06.2007
(51) Int. Cl.: G05D 16/20, G05D 16/18

(54) **Downstream flow sensing probe**

(30) Priority: 28.06.2006 US 477959
(71) Applicant: Honeywell International Inc., Morristown, NJ 07962 (US)
(72) Inventor: ROBB, Scott, Chandler, AZ 85248 (US); ATKINS, Don J., Chandler, AZ 85224 (US); BANTA, Paul W., Phoenix, AZ 85048 (US)
(74) Representative: Haley, Stephen

(57) **Abstract**

An apparatus is provided for a regulator valve (10) comprising a duct (12), a valve element (14), a regulator unit (16), and a fluid pressure sensor (18). The duct (12) has an inner surface (24) that defines a flow passage (26). The valve element (14) is movably disposed within the flow passage (26). The regulator unit (16) is coupled to the valve element (14), and is further coupled to receive fluid at a feedback pressure magnitude. The regulator unit (16) is configured to controllably position the valve element (14) based at least in part on the feedback pressure magnitude, to thereby regulate fluid pressure downstream of the valve element (14) to a regulated pressure magnitude that results in a static pressure magnitude at least proximate the duct inner surface (24). The fluid pressure sensor (18) is disposed downstream of the valve element (14), and is configured to supply the fluid at the feedback pressure magnitude, with the feedback pressure magnitude being less than the static pressure magnitude.

## Description

The present invention generally relates to a regulator valve, and more particularly relates to a regulator valve with a flow sensing probe.

Valves are used to control gases or other fluids in various types of apparatus and vehicles, such as aircraft. For example, valves can be used to control the supply of bleed air on aircraft by opening, closing, or partially obstructing various passageways, among various other valve uses. There are many different types of valves used in aircraft, other vehicles, and other apparatus, such as regulator valves, ball valves, and check valves, among others.

By way of example only, a particular type of regulator valve regulates the pressure of the fluid flowing through the valve via a downstream sensor, so that the pressure downstream is relatively constant, or at least variable only within a limited range. For example, when the downstream sensor senses a downstream pressure change, the regulator valve opens or closes, at least partially, to adjust fluid flow through the regulator valve, to thereby regulate the downstream fluid pressure.

Although regulator valves generally work well in regulating the pressure of the fluid flowing through a valve, in some instances the regulation pressure may be sensitive to the flow rate, which can cause the sensor to sense a higher pressure than actually exists through the regulator valve. This can create a droop effect in some instances, in which the pressure can drop to a less than desirable level. Accordingly, there is a need for a regulator valve that can maintain a higher pressure level in situations in which the regulation pressure may be sensitive to the flow rate.

An apparatus is provided for a regulator valve. In one embodiment, and by way of example only, the regulator valve comprises a duct, a valve element, a regulator unit, and a fluid pressure sensor. The duct has an inner surface that defines a flow passage. The valve element is movably disposed within the duct flow passage. The regulator unit is coupled to the valve element, and is further coupled to receive fluid at a feedback pressure magnitude. The regulator unit is configured to controllably position the valve element based at least in part on the feedback pressure magnitude, to thereby regulate fluid pressure downstream of the valve element to a regulated pressure magnitude that results in a static pressure magnitude at least proximate the duct inner surface. The fluid pressure sensor is disposed downstream of the valve element, and is configured to supply the fluid at the feedback pressure magnitude, with the feedback pressure magnitude being less than the static pressure magnitude.

In another embodiment, and by way of example only, the regulator valve comprises a duct, a valve element, an actuator, a regulator unit, and a fluid pressure sensor. The duct has an inner surface that defines a flow passage. The valve element is movably disposed within the duct flow passage. The actuator is coupled to the valve element, and is configured to receive fluid at a feedback pressure magnitude and to at least facilitate movement of the valve element. The regulator unit is coupled to the valve element and the actuator, and is configured to at least facilitate controllably positioning the valve element based at least in part on the feedback pressure magnitude to thereby regulate fluid pressure downstream of the valve element to a regulated pressure magnitude that results in a static pressure magnitude at least proximate the duct inner surface. The fluid pressure sensor is disposed downstream of the valve element, and is configured to supply the fluid at the feedback pressure magnitude, with the feedback pressure magnitude being less than the static pressure magnitude.

In yet another embodiment, and by way of example only, the regulator valve comprises a duct, a valve element, a regulator unit, a fluid pressure sensor, and an actuator. The duct has an inner surface that defines a flow passage. The valve element is movably disposed within the duct flow passage. The regulator unit is coupled to the valve element, and is further coupled to receive fluid at a feedback pressure magnitude. The regulator unit is configured to controllably position the valve element based at least in part on the feedback pressure magnitude, to thereby regulate fluid pressure downstream of the valve element to a regulated pressure magnitude that results in a static pressure magnitude at least proximate the duct inner surface. The fluid pressure sensor is disposed downstream of the valve element, and is configured to supply the fluid at the feedback pressure magnitude, with the feedback pressure magnitude being less than the static pressure magnitude. The fluid pressure sensor comprises an outer surface, an inner surface, and a plurality of orifices. At least a portion of the fluid pressure sensor outer surface is configured to be in direct contact with fluid flowing downstream of the valve element. At least a portion of the fluid pressure sensor inner surface is configured to be protected from direct contact with fluid flowing downstream of the valve element. The plurality of orifices extend between the inner and outer surfaces of the fluid pressure sensor, and are configured to create a pressure differential around the fluid pressure sensor. The actuator coupled to the regulator unit and the valve element, and is configured to at least facilitate movement of the valve element.

### IN THE DRAWINGS

The present invention will hereinafter be described in conjunction with the following drawing figures, wherein like numerals denote like elements, and

FIG. 1 depicts a schematic view of one embodiment of a regulator valve with a downstream flow sensing probe;

FIG. 2 depicts a schematic view of an alternate embodiment of a regulator valve with a downstream flow sensing probe;

FIG. 3 depicts a top cross section view of one embodiment of a downstream flow sensing probe used in the regulator valve of FIGs. 1 and 2; and

FIG. 4 depicts a side cross section view of the downstream flow sensing probe of FIG. 3.

The following detailed description of the invention is merely exemplary in nature and is not intended to limit the invention or the application and uses of the invention. Furthermore, there is no intention to be bound by any theory presented in the preceding background of the invention or the following detailed description of the invention.

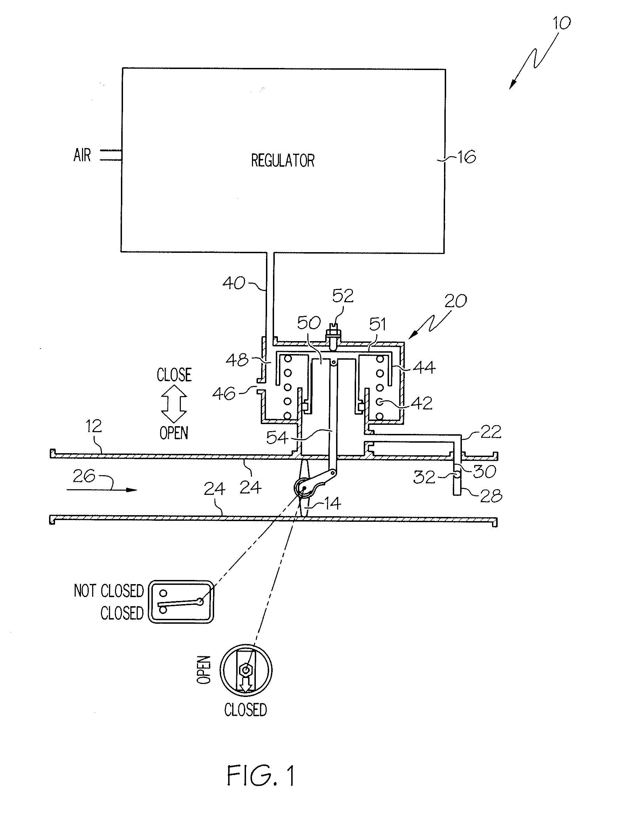

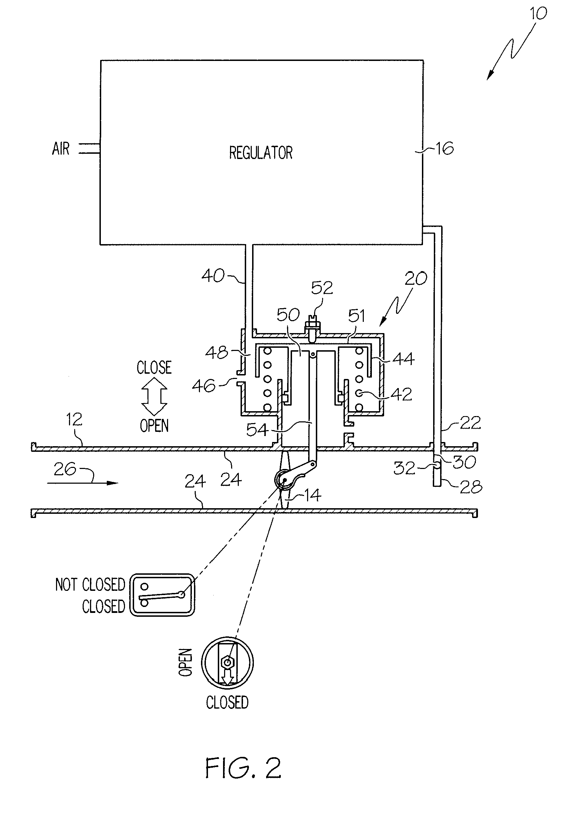

FIGs. 1 and 2 depict schematic views of exemplary embodiments of a regulator valve 10. The regulator valve 10 includes a duct 12, a valve element 14, a regulator unit 16, and a fluid pressure sensor 18. In the depicted embodiments, the regulated valve 10 additionally includes an actuator 20 and a downstream sense line 22.

The duct 12 has an inner surface 24 that defines a duct flow passage 26. The valve element 14 is disposed within the duct flow passage 26, and is movable to a closed position, a fully-open position, and a plurality of intermediate positions therebetween. In the closed position, fluid is at least restricted (and preferably prevented) from flowing through the duct flow passage 26. Conversely, in the intermediate and fully-open positions, fluid is at least partially allowed to flow through the duct flow passage 26. Generally, the closer the valve element 14 is to the fully-open position, fluid is allowed to flow more freely through the duct flow passage 26 and beyond the valve element 14, thereby increasing fluid pressure in the duct flow passage 26 downstream. Conversely, the closer the valve element 14 is to the closed position, fluid is allowed to flow less freely through the duct flow passage 26 and beyond the valve element 14, thereby decreasing fluid pressure in the duct flow passage 26.

In the depicted embodiments, the valve element 14 is a butterfly valve element, although it will be appreciated that the valve element 14 can take any one of a number of different shapes, sizes and configurations. When the butterfly valve element 14 is moved into the fully-open position substantially parallel to the duct flow passage 26, fluid is allowed to flow through the duct flow passage 26 beyond the butterfly valve element 14. Conversely, when the butterfly valve 14 is moved into a closed position substantially perpendicular to the duct flow passage 26, fluid is restricted from flowing through the duct flow passage 26 beyond the butterfly valve element 14. Similarly, in various intermediate positions, fluid is allowed to flow more freely as the butterfly valve 14 is positioned closer to parallel to the duct flow passage 26, and fluid is allowed to flow less freely as the butterfly valve 14 is positioned closer to perpendicular to the duct flow passage 26.

The regulator unit 16 is coupled to the valve element 14, and, in some embodiments, is further coupled to receive fluid at a feedback pressure magnitude. The regulator unit 16 is configured to controllably position the valve element 14 based at least in part on the feedback pressure magnitude, to thereby regulate fluid pressure downstream of the valve element 14 to a regulated pressure magnitude. In one particular embodiment, the regulator unit 16 is coupled to receive a remote supply of fluid pressure (not shown), and includes a reference pressure regulator (not shown), a torque motor (not shown), and a solenoid valve (not shown). However, it will be appreciated that the regulator unit 16 can take any one of a number of different configurations. It will further be appreciated that the regulator unit 16 can regulate the fluid pressure in any one of a number of different implementations, including, by way of example only, the preferred embodiments depicted in FIGs. 1 and 2. For example, as will be described in greater detail further below, the regulator unit 16 can supply a regulated fluid pressure to the actuator 20, as depicted in FIG. 1.

The fluid pressure sensor 18 is disposed in the duct flow passage 26 downstream of the valve element 14, and is configured to supply fluid flow at the feedback pressure magnitude, with the feedback pressure magnitude being less than the static pressure magnitude. As depicted in FIG. 1, in a preferred embodiment the fluid pressure sensor 18 can supply the fluid flow at the feedback pressure to the actuator 20, among various other potential delivery paths and mechanisms.

The actuator 20 is configured to at least facilitate movement of the valve element 14 between the closed, fully-open, and intermediate positions. As described in greater detail further below, and as mentioned above, the actuator 20 can be configured to directly receive the supply of fluid at the feedback pressure magnitude from the fluid pressure sensor 18 via the downstream sense line 22. As depicted in FIGs. 1 and 2 and explained in greater detail further below, the actuator 20 can be connected to the regulator unit 16 via a second line 40 to facilitate the regulation of fluid pressure and to coordinate movement of the valve element 14. In the depicted embodiments, the actuator 20 has a spring 42, a diaphragm 44, a vent 46, a piston 51 that defines an opening chamber 48 and a closing chamber 50, a close stop 52, and a rod 54. However, it will be appreciated that the regulator can instead take any one of a number of different configurations.

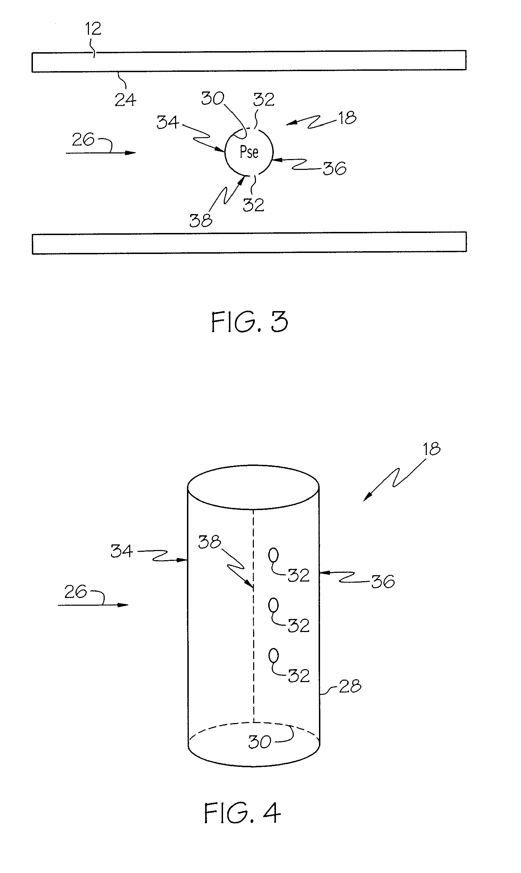

Turning now to FIGs. 3 and 4, a top cross section view and a side cross section view, respectively, of the fluid pressure sensor 18 are depicted. When the fluid pressure sensor 18 is placed in the duct flow passage 26, a pressure distribution is created around the surface of the fluid pressure sensor 18 that is a function of the velocity of the fluid flowing through the duct flow passage 26. In the depicted embodiments, the fluid pressure sensor 18 is at least substantially cylindrical in cross section. However, it will be appreciated that the fluid pressure sensor 18 can instead have a tear drop cross section, or any one of a number of other different shapes that create a pressure differential around the fluid pressure sensor 18. Preferably the fluid pressure sensor 18 comprises an outer surface 28, an inner surface 30, and a plurality of orifices 32.

The plurality of orifices 32 extend between the outer and inner surfaces 28, 30 of the fluid pressure sensor 18, and are located at points along the outer and inner surfaces 28, 30 which will exhibit lower pressure than the free-stream pressure of the fluid flowing through the duct flow passage 26. In a preferred embodiment, the orifices 32 in the fluid pressure sensor 18 are holes. The holes 32 are preferably disposed such that at least two of the holes 32 are disposed on opposite sides of the fluid pressure sensor 18. In a most preferred embodiment, the fluid pressure sensor 18 has an upstream end 34, a downstream end 36, and a center region 38 disposed halfway between the upstream and downstream ends 34, 36. In this most preferred embodiment, at least two of the holes 32 on opposite sides of the fluid pressure sensor 18 are disposed near, but slightly on the downstream side of, the center region 38 of the fluid pressure sensor 18. However, it will be appreciated that the orifices 32 can comprise slots, or any one of a number of different other types of orifices, or combinations thereof, instead of or in addition to holes. It will further be appreciated that the number of orifices 32 in the fluid pressure sensor 18 can differ, and that the orifices 32 can take any one of a number of different shapes, sizes, and configurations, or combinations thereof, and can be disposed in any number of different places on the fluid pressure sensor 18.

The operation of the regulator valve 10, in the preferred embodiment depicted in FIG. 1, is as follows, assuming the regulator valve 10 is initially in a partially opened position, in which fluid is flowing through the duct flow passage 26. The fluid pressure sensor 18 supplies fluid at the feedback pressure magnitude via the downstream sense line 22 to the actuator closing chamber 50. As described above, the feedback pressure magnitude is less than the static pressure magnitude, due to the configuration of the fluid pressure sensor 18. Simultaneously, the regulator unit supplies a substantially constant, regulated fluid pressure via the second line 40 to the actuator opening chamber 48.

As the feedback pressure supplied by the fluid pressure sensor 18 increases, a fluid pressure differential is formed between the closing chamber 50 and the opening chamber 48. The increased fluid pressure in the closing chamber 50, combined with the force of the spring 42, overcomes the constant fluid pressure in the opening chamber 48, thereby moving the piston 51 in the direction of the close stop 52 and away from the valve element 14. The piston 51 in turn moves the rod 54 in the same direction, thereby moving the valve element 14 toward the closed position. This results in decreased fluid flow through the duct flow passage 26.

Conversely, when the fluid pressure supplied by the fluid pressure sensor 18 to the actuator 20 decreases, a reverse fluid pressure differential is formed between the closing chamber 50 and the opening chamber 48. The reduced combined pressure of the closing chamber 50 and the spring 42 is overcome by the constant pressure in the opening chamber 48, thereby moving the piston 51 in the direction away from the close stop 52 and toward the valve element 14. The piston 51 in turn moves the rod 54 in the same direction, thereby moving the valve element 14 toward the fully-open position. This results in an increased fluid flow through the duct flow passage 26 and around the valve element 14.

An alternate embodiment for the regulator valve 10 is depicted in FIG. 2. The regulator valve 10 depicted in FIG. 2 is similar to the regulator valve 10 of FIG. 1, with like numerals denote like elements, but with two primary differences. First, in the alternate embodiment of FIG. 2, the fluid pressure sensor 18 can supply fluid at the feedback pressure magnitude directly to the regulator unit 16, rather than to the actuator 18 as in the embodiment of FIG. 1. Second, the regulator unit 16 can supply a variable fluid pressure to the actuator 20, rather than a substantially constant, regulated fluid flow as in the embodiment of FIG. 1.

The operation of the regulator valve 10, in the alternate embodiment depicted in FIG. 2, is as follows, assuming the regulator valve 10 is initially in a partially opened position, in which fluid is flowing through the duct flow passage 26. The fluid pressure sensor 18 supplies fluid at the feedback pressure magnitude via the downstream sense line 22 to the regulator unit 16. As described above, the feedback pressure magnitude is less than the static pressure magnitude, due to the configuration of the fluid pressure sensor 18. The regulator unit 16 provides a variable fluid pressure via the second line 40 to the actuator opening chamber 48.

Still referring to FIG. 2, as the fluid pressure supplied by the fluid pressure sensor 18 to the regulator unit 16 increases, the fluid pressure supplied by the regulator unit 16 to the actuator opening chamber 48 also increases. In order to balance this fluid pressure increase, the rod 54 of the actuator 20 moves the valve element 14 toward the closed position. This results in decreased fluid flow through the duct flow passage 26.

Conversely, when the fluid pressure supplied by the fluid pressure sensor 18 to the regulator unit 16 decreases in the embodiment of FIG. 2, the fluid pressure supplied by the regulator unit 16 to the opening chamber 48 of the actuator 20 also decreases. In order to balance this fluid pressure decrease, the rod 54 of the actuator 20 moves the valve element 14 toward the fully-open position. This results in increased fluid flow through the duct flow passage 26 and around the valve element 14.

It will be appreciated that the configuration of the fluid pressure sensor 18, the downstream sense line 22, the regulator unit 16, the actuator 20, and the valve element 14, and various other components of the regulator valve 10, can take any one of a number of different configurations. Regardless of the particular configuration, the regulator valve 10 provides regulation of the pressure of the fluid flow therethrough. Moreover, the features of the fluid pressure sensor 18 help to alleviate potential droop effects associated with many regulator valves facing one or more restrictions downstream. The regulator valve 10 can be used in any one of a number of different types of applications, including, by way of example only, use in aircraft bleed air systems as a modulating device delivering air from an engine down to the level of an environmental control system, or use as a variable regulator to control fluid flow into an air cycle machine of an environmental control system, among various other potential applications of the regulator valve 10.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes can be made in the function and arrangement of elements described in an exemplary embodiment without departing from the scope of the invention as set forth in the appended claims and their legal equivalents.

## Claims

1. A regulator valve (10), comprising:
a duct (12) having an inner surface (24) that defines a flow passage (26);
a valve element (14) movably disposed within the flow passage (26);
a regulator unit (16) coupled to the valve element (14) and further coupled to receive fluid at a feedback pressure magnitude, the regulator unit (16) configured to controllably position the valve element (14) based at least in part on the feedback pressure magnitude to thereby regulate fluid pressure downstream of the valve element (14) to a regulated pressure magnitude that results in a static pressure magnitude at least proximate the duct inner surface (24); and
a fluid pressure sensor (18) disposed downstream of the valve element (14) and configured to supply the fluid at the feedback pressure magnitude, the feedback pressure magnitude being less than the static pressure magnitude.

2. The regulator valve (10) of Claim 1, wherein the fluid pressure sensor (18) is at least substantially cylindrical in cross section.

3. The regulator valve (10) of Claim 1, wherein the fluid pressure sensor (18) has a cross section resembling a tear drop.

4. The regulator valve (10) of Claim 1, wherein the fluid pressure sensor (18) comprises:
an outer surface (28), at least a portion of which is configured to be in direct contact with fluid flowing downstream of the valve element (14);
an inner surface (30), at least a portion of which is configured to be protected from direct contact with fluid flowing downstream of the valve element (14); and
a plurality of orifices (32) extending between the inner (30) and outer (28) surfaces, the plurality of orifices (32) configured to create a pressure differential around the fluid pressure sensor (18).

5. The regulator valve (10) of Claim 4, wherein the orifices (32) in the fluid pressure sensor (18) comprise a plurality of holes (32).

6. The regulator valve (10) of Claim 5, wherein at least two of the holes (32) in the fluid pressure sensor (18) are disposed on opposite sides of the fluid pressure sensor (18).

7. The regulator valve (10) of Claim 5, wherein:
the fluid pressure sensor (18) has an upstream end (34), a downstream end (36), and a center region (38) disposed halfway between the upstream (34) and downstream (36) ends; and
at least two of the holes (32) on opposite sides of the fluid pressure sensor (18) are disposed near, but slightly on the downstream side of, the center region (38) of the fluid pressure sensor (18).

8. The regulator valve (10) of Claim 4, wherein the plurality of orifices (32) in the fluid pressure sensor (18) comprise a plurality of slots (32).

9. The regulator valve (10) of Claim 1, further comprising an actuator (20) coupled to the regulator unit (16) and the valve element (14), and configured to at least facilitate movement of the valve element (14).

10. A regulator valve (10), comprising:
a duct (12) having an inner surface (24) that defines a flow passage (26);
a valve element (14) movably disposed within the flow passage (26);
an actuator (20) coupled to the valve element (14), and configured to receive fluid at a feedback pressure magnitude and to at least facilitate movement of the valve element (14);
a regulator unit (16) coupled to the valve element (14) and the actuator (20), and configured to at least facilitate controllably positioning the valve element (14) based at least in part on the feedback pressure magnitude to thereby regulate fluid pressure downstream of the valve element (14) to a regulated pressure magnitude that results in a static pressure magnitude at least proximate the duct inner surface (24); and
a fluid pressure sensor (18) disposed downstream of the valve element (14) and configured to supply the fluid at the feedback pressure magnitude, the feedback pressure magnitude being less than the static pressure magnitude.
